# FASCICULE DE BREVET EUROPEEN

(11) **EP 0 364 332 B1**
(45) Date de publication et mention de la délivrance du brevet: **01.06.1994**
(21) Numéro de dépôt: 89402720.0
(22) Date de dépôt: 03.10.1989
(51) Int. Cl.: G11B 23/027

(54) **Boîte destinée à contenir et à immobiliser une bobine d'ordinateur**
Behälter für die Aufbewahrung und zum Festhalten einer Computer-Spule
Casing for receiving and restraining a computer reel

(30) Priorité: 10.10.1988 FR 8813285
(43) Date de publication de la demande: 18.04.1990
(73) Titulaire: POSSO, Patrick, 1009 Pully (CH)
(72) Inventeur: Posso, Patrick, CH-1009 Pully (CH)
(74) Mandataire: Caunet, Jean

(56) Documents cités:
- FR-A- 2 050 800
- FR-A- 2 455 554
- US-A- 3 661 250

## Description

La présente invention concerne une boîte destinée à contenir et immobiliser une bobine d'ordinateur.

Une telle boîte est connue en particulier par le brevet français n° 2.455.554. Elle comprend un corps dans lequel sont venus de moulage un téton central et un manchon concentrique à celui-ci. La boîte comprend également un couvercle fermant le corps en emprisonnant la bobine dont le moyeu est centré sur une bague unique d'immobilisation entourant le manchon. Le couvercle présente une cuvette centrale formée sur sa face extérieure s'emboîtant dans le manchon du corps et sur ledit téton et délimitant un logement destiné à recevoir un dispositif de verrouillage coopérant avec ce téton.

Dans ce brevet français, le dispositif de verrouillage est constitué par une gâchette unique coiffant le téton et guidée en translation entre le fond de la cuvette centrale du couvercle et un opercule, lequel est emboîté et fixé après montage de la gâchette dans ladite cuvette. Cette gâchette et le téton du corps comportent des moyens conjugués d'enclenchement susceptibles d'être mis en prise par une lame-ressort faisant corps avec ladite gâchette et prenant appui sur la paroi latérale de la cuvette pour provoquer le coulissement d'enclenchement.

Cette boîte connue présente l'inconvénient de comporter quatre pièces distinctes : le corps, le couvercle, la gâchette et l'opercule, par conséquent de nécessiter quatre opérations de fabrication avec quatre moules différents.

Par ailleurs, son montage est difficilement réalisable sur machine automatique.

Son verrouillage n'est pas d'une sécurité absolue puisqu'il dépend de la fixation de l'opercule.

Son coût est relativement élevé.

La présente invention a donc pour but de simplifier la conception et la construction du dispositif de verrouillage, ainsi que le montage des composants, de réduire le nombre de ceux-ci de quatre à trois en les fabriquant uniquement en matière plastique, de supprimer les moyens d'assemblage subsidiaires en adoptant un système d'emboîtement irréversible et de rendre le montage facile, rapide et réalisable par une machine automatique. Dès lors, la boîte peut être produite en grande série à un faible prix de revient et avec un investissement réduit en outillage.

Dans ce but et conformément à l'invention, des moyens de guidage sont prévus sur la gâchette pour pouvoir s'engager, lors d'un coulissement de déclenchement, dans des moyens de guidage prévus dans la cuvette, ces derniers faisant également office de moyens de retenue de la gachette dans la cuvette. De plus, ladite gâchette fait corps avec une butée flexible déformable dans un plan perpendiculaire à la direction de coulissement et coopérant avec un arrêtoir de la cuvette limitant la course d'enclenchement, cette butée et cet arrêtoir présentant des rampes inclinées provoquant l'effacement par flexion de ladite butée lors du montage de la gâchette dans le logement du couvercle distinct du corps, par coulissement dans le sens du déclenchement, la butée se plaçant après franchissement de l'arrêtoir en regard de celui-ci pour déterminer la position d'enclenchement et rendre la gâchette prisonnière du couvercle.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin :
- la figure 1 est une coupe diamétrale partielle d'une boîte faisant application d'un dispositif de verrouillage conforme à l'invention, cette coupe étant prise suivant la ligne I-I de la figure 3 qui correspond à l'axe de coulissement de la gâchette,
- la figure 2 est une coupe partielle prise en plan suivant la ligne II-II de la figure 1,
- la figure 3 est une élévation-coupe partielle prise suivant la ligne III-III de la figure 1,
- la figure 4 est une vue analogue à la figure 1, illustrant le montage de la gâchette dans le couvercle.

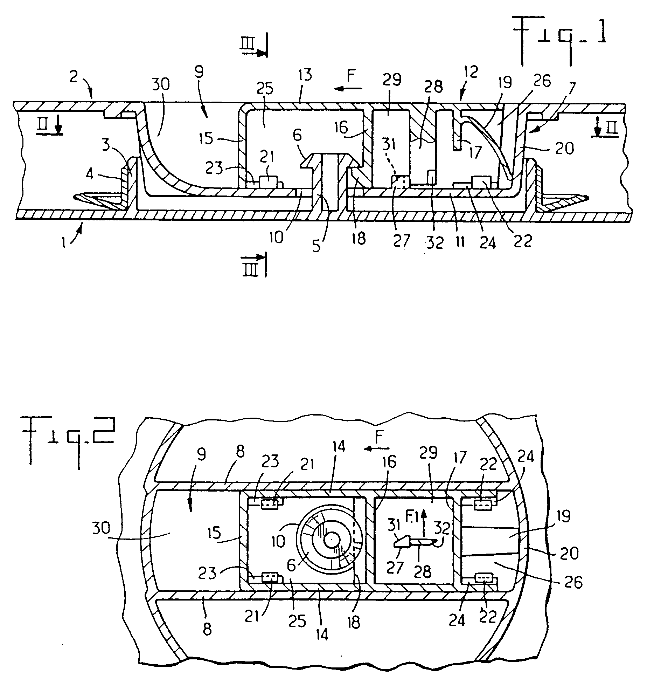

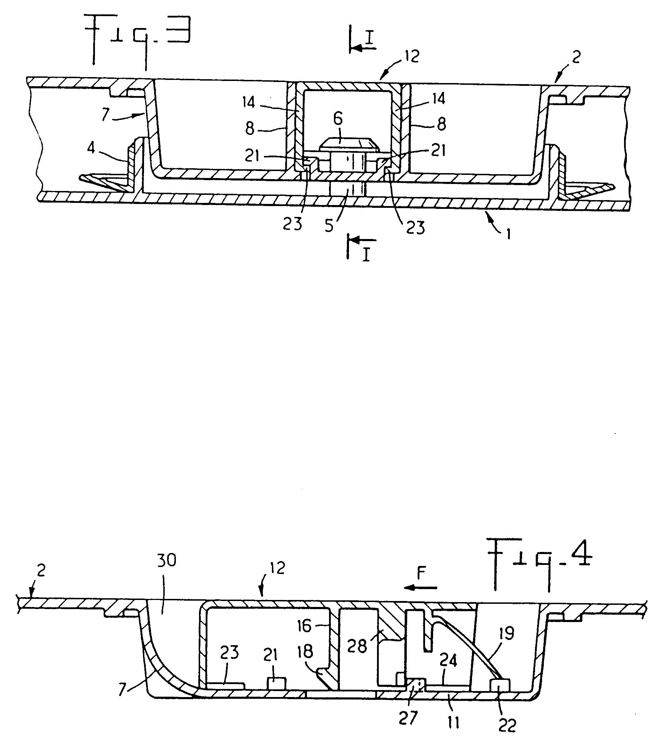

Comme le montrent les figures 1 à 3, la boîte comporte un corps 1 et un couvercle 2 destinés à contenir une bobine d'ordinateur, non représentée, et à l'immobiliser lorsqu'ils sont verrouillés l'un sur l'autre.

Le corps 1 présente en saillie interne un manchon tubulaire 3 entouré par une bague unique 4 prévue pour l'immobilisation du moyeu de la bobine. Le corps présente également en saillie interne, au centre du manchon 3, un téton 5 comportant une collerette extrême proéminente 6 destinée au verrouillage du couvercle 2 sur ce corps 1.

Le couvercle 2 présente en creux une cuvette 7 formée sur sa face extérieure et s'emboîtant dans le manchon 3 du corps 1, sans toutefois venir à son contact lorsque la boîte est fermée. Deux cloisons parallèles 8 font corps avec le fond de la cuvette 7 et, avec les bords de cette dernière, délimitent un logement 9 ouvert à l'extérieur et dans lequel débouche un trou central 10 ménagé dans le fond 11 de la cuvette pour le passage du téton 5.

Dans ce logement 9 est montée une gâchette 12 susceptible de coulisser dans une direction parallèle au plan du couvercle et qui, comme le corps 1 et le couvercle 2, est constituée par une matière plastique moulée. La gâchette 12 présente une paroi supérieure 13 faisant corps avec deux parois longitudinales 14 et des éléments transversaux 15 à 17. Les parois longitudinales sont disposées contre les cloisons 8 du couvercle. L'élément 15 est une paroi antérieure descendant jusqu'au fond 11. L'élément 16 est une barrette intermédiaire qui descend également jusqu'au fond 11 et comporte une dent saillante 18 susceptible de s'enclencher sous la collerette 6 du téton 5 pour verrouiller le couvercle 2 sur le corps 1. L'élément 17 est une nervure faisant corps avec une lame-ressort 19 destinée en prenant appui sur la paroi 20 de la cuvette à repousser la gâchette dans le sens d'enclenchement défini par la flèche F.

De plus, le fond 11 de la cuvette 7 présente en saillie deux éléments antérieurs 21 et deux éléments postérieurs 22 de glissière dans lesquels sont guidés des rebords ou coulisses 23 et 24 respectivement de la gâchette 12. Les rebords 23 s'étendent le long des parois longitudinales 14 à partir de la paroi antérieure 15 et sont situés, comme les glissières 21 d'ailleurs, dans un évidement 25 délimité au-dessus du fond 11, par la gâchette 12 entre sa paroi 15 et sa barrette 16. Les rebords 24 s'étendent le long des parois longitudinales 14 à partir de la paroi postérieure 17 et sont situés, comme les glissières 22 d'ailleurs, dans un évidement 26 délimité au-dessus du fond 11, par la gâchette 12 entre sa paroi 17 et la paroi 20 de la cuvette. L'évidement 26 est recouvert par la paroi supérieure 13 de la gâchette en totalité lorsque ladite gâchette est déclenchée (la dent 18 étant hors de prise de la collerette 6) et que la boîte est ouverte ; l'évidement 26 n'est recouvert que partiellement par la paroi supérieure 13 lorsque la gâchette est enclenchée comme cela est représenté sur la figure 1 (la dent 18 étant en prise avec la collerette 6) et que la boîte est fermée et verrouillée. De toute façon, les moyens de guidage de la gâchette sont pratiquement inaccessibles dans ces deux positions d'enclenchement et de déclenchement.

Par ailleurs, le fond 11 de la cuvette et la paroi supérieure 13 de la gâchette 12 présentent un arrêtoir 27 et une butée flexible 28 conjugués faisant saillie l'un vers l'autre dans un évidement 29 délimité dans ladite gâchette par la barrette 16 et la nervure 17. La butée 28 est maintenue en contact avec l'arrêtoir 27 (figures 1 et 2) par la lame-ressort 19 pour déterminer la position d'enclenchement de la dent 18 avec la collerette 6, position dans laquelle la boîte est fermée et verrouillée.

Lorsque l'utilisateur veut ouvrir la boîte, il met un doigt dans un évidement 30 ménagé dans la cuvette 7 devant la gâchette 12 et repousse celle-ci, contre l'action de la lame-ressort 19, jusqu'à ce qu'elle bute contre la paroi 20 de la cuvette. La fin de cette course dans le sens opposé à celui de la flèche F correspond à la position de déclenchement dans laquelle la dent 18 est hors de prise de la collerette 6 et libère le couvercle en permettant ainsi d'ouvrir la boîte.

Le montage de la gâchette 12 nécessite de placer la butée 28 derrière l'arrêtoir 27 (figures 1 et 2). La figure 4 montre comment cette opération peut être exécutée automatiquement.

L'arrêtoir 27 et la butée 8 présentent des rampes inclinées conjuguées 31 et 32 respectivement. Le couvercle 2 n'étant pas monté sur le corps 1, le trou 10 est exempt du téton 5. Dès lors, la gâchette 12 est déposée dans le logement 9 de façon que ses coulisses 23, 24 reposent sur le fond 11 devant les glissières 21, 22 et que la butée 28 soit disposée devant l'arrêtoir 27 (position représentée sur la figure 4). La gâchette 12 est alors déplacée en translation dans le sens opposé à celui de la flèche F, ce qui a pour effet successivement de faire fléchir la butée 28 dans le sens de la flèche F1 par coopération des rampes inclinées conjuguées 31 et 32, ensuite d'engager les coulisses 23, 24 dans les glissières 21, 22, enfin de libérer la butée 28 qui par rappel élastique se place derrière l'arrêtoir 27 ; bien entendu, en fin de ce coulissement, la lame-ressort 19 est mise sous tension en fléchissant et exerce alors une force de rappel élastique sur la gâchette pour la mettre en position d'enclenchement par contact de la butée 28 avec l'arrêtoir 27, position dans laquelle la dent 18 de la barrette 16 se place sous la collerette 6 du téton 5 et verrouille la boîte en position de fermeture.

La gâchette 12 une fois montée est devenue prisonnière définitivement du couvercle 2.

## Revendications

1. Boîte destinée à contenir et à immobiliser une bobine d'ordinateur, la boîte comprenant, d'une part, un corps (1) dans lequel sont venus de moulage un téton central (5) et un manchon (3) concentrique à ce téton, d'autre part, un couvercle (2) fermant le corps en emprisonnant la bobine dont le moyeu est centré sur une bague unique d'immobilisation (4) entourant ledit manchon, le couvercle (2) formant sur sa face extérieure une cuvette centrale (7) s'emboîtant dans le manchon du corps et sur ledit téton et présentant un logement (9) délimité par les bords de la cuvette centrale (7) et par deux nervures (8) planes et parallèles faisant corps avec le fond de cette cuvette, ce logement étant destiné à recevoir une gâchette unique (12) coiffant le téton (5) et guidée en coulissement dans une direction parallèle au plan du couvercle, la gâchette (12) et ce téton (5) comportant des moyens conjugués d'enclenchement (6, 18), susceptibles d'être mis en prise par une lame-ressort (19) faisant corps avec cette gâchette (12) et prenant appui sur la paroi (20) du logement pour provoquer le coulissement d'enclenchement (F),
caractérisée en ce que :
- des moyens de guidage (23, 24) sont prévus sur la gachette pour pouvoir s'engager dans des moyens de guidage et de retenue (21, 22) prévus dans la cuvette (7) lors d'un coulissement de déclenchement,
- et ladite gâchette (12) fait corps avec une butée flexible (28) déformable dans un plan (F1) perpendiculaire à la direction de coulissement (F) et coopérant avec un arrêtoir (27) de la cuvette (7) délimitant la course d'enclenchement, cette butée et cet arrêtoir présentant des rampes inclinées (31, 32) provoquant l'effacement par flexion de ladite butée lors du montage de la gâchette dans le logement du couvercle distinct du corps, par coulissement dans le sens du déclenchement, la butée se plaçant après franchissement de l'arrêtoir en regard de celui-ci pour déterminer la position d'enclenchement et rendre la gâchette prisonnière du couvercle.

## Claims

1. Case intended for containing and immobilizing a computer tape reel, said case comprising, on the one hand, a body (1) in which are integrally moulded a central post (5) and a sleeve (3) concentric to said post, on the other hand, a cover (2) closing the body while imprisoning the tape reel of which the hub is centred on a single immobilizing ring (4) surrounding said sleeve, the cover (2) presenting on its outer face a central dish (7) which fits in the sleeve of the body and on said post and having a housing (9) defined by the edges of the central dish (7) and by two plane and parallel partitions (8) integral with the bottom of said dish, said housing being adapted to receive a single spring catch (12) covering the post (5) and guided in slide in a direction parallel to the plane of the cover, the spring catch (12) and post (5) comprising mating means (6, 18) for engagement capable of meshing by a leaf spring (19) integral with this spring catch (12) and abutting on the wall (20) of the housing to provoke slide for engagement (F),
characterized in that:
- guiding means (23, 24) are provided on the spring catch in order to be able to engage in guiding and holding means (21, 22) provided in the dish (7) during a slide for disengagement,
- and said spring catch (12) is integral with a flexible stop (28) deformable in a plane (F1) perpendicular to the direction of slide (F) and cooperating with a lug (27) of the dish (7) defining the stroke of engagement, said stop and said lug presenting inclined ramps (31, 32) provoking retraction by bending of said stop during assembly of the spring catch in the housing of the cover distinct from the body, by slide in the direction of disengagement, the stop being placed, after the lug has been cleared, opposite the latter to determine the position of engagement and to render the spring catch captive of the cover.

## Patentansprüche

1. Behälter für die Aufbewahrung und zum Festhalten einer Computer-Spule, wobei der Behälter einerseits einen Körper (1) aufweist, an dem ein Zentralansatz (5) und eine zu diesem Ansatz konzentrische Hülse (3) angeformt sind und andererseits einen Deckel (2) aufweist, der den Körper schließt, indem er die Spule einschließt, deren Nabe auf einem einzigen, die Hülse umgebenden Festhaltering (4) zentriert ist, wobei der Deckel (2) auf seiner Außenseite ein zentrales Gefäß (7) bildet, das in die Hülse des Körpers und auf den Ansatz paßt und eine Aufnahme (9) aufweist, die von den Rändern des zentralen Gefäßes und von zwei ebenen, parallelen Rippen (8) begrenzt ist, die eine Einheit bilden mit dem Boden dieses Gefäßes, wobei die Aufnahme dazu bestimmt ist, eine einzige Zuhaltung (12) aufzunehmen, die den Ansatz (5) überdeckt und gleitend in einer zur Deckelfläche parallelen Richtung geführt ist, wobei die Zuhaltung (12) und der Ansatz (5) verbundene Einrastmittel (6, 18) aufweisen, die von einem Federblatt (19) eingegriffen werden können, das eine Einheit bildet mit dieser Zuhaltung (12) und gegen die Wand (20) der Aufnahme drückt, um das Einrastgleiten (F) zu erzeugen,
dadurch gekennzeichnet, daß
- diese Führungsmittel (23, 24) auf der Zuhaltung vorgesehen sind, um in die in dem Gefäß (7) vorgesehenen Führungs- und Haltemittel (21, 22) bei einem Auslösungsgleiten einzugreifen,
- die Zuhaltung (12) eine Einheit bildet mit einem elastischen Anschlag (28), der in einer Ebene (F1) senkrecht zur Gleitrichtung (F) verformbar ist und mit einem Stopper (27) des Gefäßes (7) zusammenwirkt, der den Einrastlauf begrenzt, wobei der Anschlag und der Stopper geneigte Ebenen (31, 32) aufweisen, die die Beseitigung dieses Anschlags durch Durchbiegen beim Anbringen der Zuhaltung in der Aufnahme des vom Körper getrennten Deckels erzeugen, wobei durch Gleiten in Auslöserichtung der Anschlag nach Überschreiten des Stoppers sich gegenüber von diesem plaziert, um die Einraststellung zu bestimmen und die Zuhaltung vom Deckel festhalten zu lassen.
